# EUROPÄISCHE PATENTSCHRIFT

(11) **EP 4 264 090 B1**
(45) Veröffentlichungstag und Bekanntmachung des Hinweises auf die Patenterteilung: **01.10.2025**
(21) Anmeldenummer: 21836367.9
(22) Anmeldetag: 07.12.2021
(51) Int. Cl.: F16J 15/34, G01M 13/005

(54) **VERFAHREN ZUM ÜBERWACHEN EINER GLEITRINGDICHTUNGSANORDNUNG SOWIE GLEITRINGDICHTUNGSANORDNUNG**
METHOD FOR MONITORING A SLIP-RING SEAL ASSEMBLY, AND SLIP-RING SEAL ASSEMBLY
PROCÉDÉ DE SURVEILLANCE D'UN ENSEMBLE D'ÉTANCHÉITÉ À BAGUE COULISSANTE, ET ENSEMBLE D'ÉTANCHÉITÉ À BAGUE COULISSANTE

(30) Priorität: 21.12.2020 DE 102020134365
(43) Veröffentlichungstag der Anmeldung: 25.10.2023
(73) Patentinhaber: EagleBurgmann Germany GmbH & Co. KG, 82515 Wolfratshausen (DE)
(72) Erfinder: WERDECKER, Ferdinand, 82432 Walchensee (DE); MÜLLER, Michael, 83673 Bichl (DE); KLUSCH, Dieter, 82377 Penzberg (DE)
(74) Vertreter: Hoefer & Partner Patentanwälte mbB
(86) Internationale Anmeldenummer: PCT/EP2021/084502
(87) Internationale Veröffentlichungsnummer: WO 2022/135898

(56) Entgegenhaltungen:
- WO-A1-2021/133662
- CN-A- 109 991 314
- DE-A1- 19 724 308
- US-A1- 2017 241 955

## Beschreibung

Die vorliegende Erfindung betrifft ein Verfahren zum Überwachen einer Gleitringdichtungsanordnung basierend auf Prüfstandsdaten und Betriebsdaten einer individuellen Gleitringdichtungsanordnung sowie eine Gleitringdichtungsanordnung mit einer Rechnereinheit zur Ausführung des Verfahrens und eine Maschine, insbesondere ein Kompressor, mit einer derartigen Gleitringdichtungsanordnung.

Gleitringdichtungsanordnungen sind aus dem Stand der Technik in unterschiedlichen Ausgestaltungen bekannt. Gleitringdichtungsanordnungen übernehmen hierbei wichtige Abdichtungsfunktionen an verschiedensten Maschinen und Vorrichtungen, wobei insbesondere auch für die Umwelt kritische Medien abzudichten sind. Von daher ist über eine Lebensdauer der Gleitringdichtungsanordnung eine sichere Abdichtung notwendig. Dabei sollte eine Überwachung der Gleitringdichtungsanordnung möglich sein und insbesondere frühzeitig ein möglicherweise auftretender Ausfall der Gleitringdichtungsanordnung erkannt werden und gegebenenfalls entsprechenden Gegenmaßnahmen, zum Beispiel Verkürzung eines Wartungsintervalls oder dergleichen, durchgeführt werden. Hierbei ist es beispielsweise bekannt, Temperatursensoren möglichst nahe an den Gleitringen der Gleitringdichtungsanordnung anzubringen, um eine Temperatur der Bauteile der Gleitringdichtung zu überwachen. Bei Erreichen von kritischen Temperaturen kann dies ein Hinweis darauf sein, dass die Gleitringdichtungsanordnung möglicherweise ein technisches Problem aufweist. Ein Problemkreis hierbei ist allerdings, dass Gleitringdichtungsanordnungen häufig keine Massenbauteile sind, sondern individuell für den jeweiligen Einsatzzweck sowohl in geometrischer Hinsicht betreffend beispielsweise Durchmesser der Gleitringe als auch hinsichtlich unterschiedlichster Einsatzbedingungen betreffend Drücke, Temperaturen, unterschiedlichste Medien, ausgelegt sind. Von daher ist, nur eine allgemeine Temperaturüberwachung der Gleitringdichtungsanordnung nicht immer ausreichend, um aussagefähige Einschätzungen des Zustands der Gleitringdichtungsanordnung zu treffen. Aus der CN 109991314 A ist ein Verfahren zur Überwachung einer Gleitringdichtungsanordnung bekannt, welche auf einem lernenden System basiert. Weiterhin zeigt die DE 197 24 308 A1 ein Diagnosesystem einer Gleitringdichtung, welches erfasste Messwerte mit bekannten Vergleichswerten vergleicht.

Es ist daher Aufgabe der vorliegenden Erfindung, ein Verfahren zum Überwachen einer Gleitringdichtungsanordnung sowie eine Gleitringdichtungsanordnung und eine Maschine bereitzustellen, welche bei einfachem Aufbau und einfacher, kostengünstiger Herstellung eine verbesserte Überwachung der Gleitringdichtungsanordnung ermöglicht.

Diese Aufgabe wird durch ein Verfahren mit den Merkmalen des Anspruchs 1, eine Gleitringdichtungsanordnung mit den Merkmalen des Anspruchs 12 und eine Maschine mit den Merkmalen des Anspruchs 15 gelöst. Die Unteransprüche zeigen jeweils bevorzugte Weiterbildungen der Erfindungen.

Da erfindungsgemäße Verfahren zum Überwachen einer Gleitringdichtungsanordnung mit den Merkmalen des Anspruchs 1 weist den Vorteil auf, dass eine exakte und individuelle Überwachung einzelner Gleitringdichtungsanordnungen möglich ist. Dadurch wird eine Aussagekraft von erfassten Daten individuell für eine jeweilige Gleitringdichtungsanordnung deutlich verbessert. Erfindungsgemäß werden somit für jede individuelle Gleitringdichtungsanordnung individuelle Daten zur Überwachung verwendet. Dies wird erfindungsgemäß dadurch erreicht, dass vor einem eigentlichen Betrieb in einem Dichtsystem die Gleitringdichtungsanordnung individuell auf einem Prüfstand in Betrieb genommen wird und dabei Prüfstanddaten erfasst werden, welche als Soll-Daten definiert werden. Somit können individuelle Soll-Daten einer einzelnen Gleitringdichtungsanordnung auf dem Prüfstand erzeugt werden. Anschließend wird die so getestete Gleitringdichtungsanordnung in einem Dichtsystem eingebaut und dann werden Betriebsdaten dieser eingebauten individuellen Gleitringdichtungsanordnung im Dichtsystem im eingebauten Zustand erfasst, wobei die erfassten Daten als Ist-Daten definiert werden. Anschließend wird ein Soll-Ist-Vergleich der Soll-Daten mit den Ist-Daten durchgeführt, um die Gleitringdichtungsanordnung zu überwachen. Somit ist es möglich, dass individuelle Daten für jeweils eine Gleitringdichtungsanordnung erhalten werden und somit auch individuelle Schwellenwerte und/oder andere Daten, welche auf einen möglichen Ausfall oder ein Problem der individuellen Gleitringdichtungsanordnung hindeuten, definiert werden.

Die Prüfstanddaten und/oder die Betriebsdaten der individuellen Gleitringdichtungsanordnung sind beispielsweise Temperatur, Druck, Leckage, Drehzahl, Spalthöhe, Vibrationen und/oder Körperschall umfassen. Zusätzlich können auch Umgebungsdaten, z.B. Temperatur des abzudichtenden Mediums, Umgebungstemperatur, Druck des abzudichtenden Mediums, Art des abzudichtenden Mediums oder dergleichen, in die Überwachung mit einbezogen werden.

Somit kann durch das erfindungsgemäße Verfahren mit höchster Genauigkeit in kürzester Zeit eine individuelle Aussage betreffend eine Überwachung der Gleitringdichtungsanordnung durchgeführt werden. Insbesondere ist die Überwachung wenig rechenintensiv, sodass es möglich ist, dass eine Überwachung in Echtzeit ohne lange Rechendauern möglich ist. Der Soll-Ist-Vergleich kann dabei insbesondere in jedem Betriebspunkt der individuellen Gleitringdichtungsanordnung durchgeführt werden.

Vorzugsweise führt das erfindungsgemäße Verfahren bei einer Feststellung einer Abweichung zwischen den Soll-Daten und den Ist-Daten, die über einem vorbestimmten Schwellenwert liegen, Gegenmaßnahmen durch und/oder gibt eine Warnung aus. Als Gegenmaßnahmen kann beispielsweise eine Drehzahl der Gleitringdichtungsanordnung reduziert werden oder ein verstärktes Kühlen, beispielsweise durch Erhöhung einer Strömungsgeschwindigkeit eines Sperrfluids, durchgeführt werden. Ferner kann auch ein Druck des Mediums und/oder ein Druck des Versorgungsmediums geändert werden.

Weiter bevorzugt werden die Ist-Daten in einem digitalen Zwilling der eingebauten, individuellen Gleitringdichtungsanordnung verwendet, um eine Simulation der individuellen Gleitringdichtungsanordnung auf dem digitalen Zwilling durchzuführen. Der digitale Zwilling bildet hierbei ein digitales Abbild der zur überwachenden, realen Gleitringdichtungsanordnung. Der digitale Zwilling basiert dabei auf mathematischen Berechnungsmethoden sowie individuellen geometrischen und physikalischen Größen der Gleitringdichtungsanordnung und führt eine Simulation basierend den erfassten individuellen Betriebsdaten und/oder den erfassten individuellen Umgebungsdaten, und/oder auf Betriebsdaten und/oder Umgebungsdaten aus der Vergangenheit aus.

Vorzugsweise werden die im digitalen Zwilling erzeugten Simulationsdaten mit den Soll-Daten des Prüfstands verglichen.

Weiter bevorzugt werden für die Simulation im digitalen Zwilling weitere individuelle Soll-Daten und/oder Ist-Daten von Gleitringdichtungsanordnungen einer gleichen Baureihe wie die zu überwachende Gleitringdichtungsanordnung verwendet. Dadurch kann ein Datenpool für die Überwachung signifikant vergrößert werden, wodurch noch bessere Ergebnisse hinsichtlich der Überwachung erreicht werden.

Vorzugsweise werden beim Erfassen der Betriebsdaten der individuellen Gleitringdichtungsanordnung auf dem Prüfstand die Soll-Daten nur punktuell für unterschiedliche Betriebszustände der Gleitringdichtungsanordnung erfasst. Die Zwischendaten zwischen den punktuellen, erfassten Betriebszuständen, die zwischen den einzelnen punktuellen Daten liegen, werden dann mittels einer Interpolation bestimmt. Somit kann eine vollständige Soll-Datenreihe der Soll-Daten auf dem Prüfstand bei einer kurzen Messzeit erhalten werden. Dadurch ist es möglich, dass dann im Betrieb, d.h. im eingebauten Zustand der individuellen Gleitringdichtungsanordnung eine Überwachung in jedem beliebigen Betriebspunkt der Gleitringdichtungsanordnung möglich ist.

Besonders bevorzugt wird bei der Simulation der individuellen Gleitringdichtungsanordnung im digitalen Zwilling ein Leckage-Wert der Gleitringdichtungsanordnung bestimmt und als Steuergröße zur Steuerung der Gleitringdichtungsanordnung im Dichtsystem verwendet. Wenn die individuelle Leckage der Gleitringdichtungsanordnung beispielsweise über einen vorbestimmten Leckage-Schwellenwert steigt, ist dies ein Hinweis auf ein mögliches Problem. Der individuelle Leckage-Schwellenwert ist dabei individuell für jede einzelne Gleitringdichtungsanordnung individuell bestimmt.

Weiter bevorzugt erfolgt eine Anpassung der vom Prüfstand erfassten Soll-Daten über die Zeit mit Ist-Daten aus der Vergangenheit. Dadurch ist es möglich, dass beim Soll-Ist-Vergleich auch ein gewisser Verschleiß der Gleitringdichtungsanordnung über die Zeit berücksichtigt wird.

Vorzugsweise sind die erfassten Betriebsdaten der individuellen Gleitringdichtung ausgewählt aus Daten zur Temperatur, Druck, Drehzahl, Leckage über die Gleitringdichtung, Spalthöhe der Gleitringdichtung, Vibration an den Gleitringen der Gleitringdichtung, Körperschall, Oberflächenschall, Spannungen und/oder Verformungen der Gleitringe, Auftreten von Kontakten an den Gleitflächen der Gleitringe und/oder Verschleiß an den Gleitringen der Gleitringdichtung.

Der digitale Zwilling ist vorzugsweise als lernendes System eingerichtet, sodass durch die Erfahrungen im Betrieb der individuellen Gleitringdichtungsanordnung und/oder zusätzlich auch durch Erfahrungen im Betrieb von baureihengleichen, anderen Gleitringdichtungsanordnungen eine ständige Anpassung und Aktualisierung des digitalen Zwillings erfolgt.

Weiter bevorzugt führt die Rechnereinheit ein Vergleichsergebnis des Vergleichs der Soll-Daten mit den Ist-Daten einer Maschinensteuerung zu. Die Maschinensteuerung ist eingerichtet, zur Steuerung einer Maschine, insbesondere eines Kompressors. Die Maschinensteuerung überträgt dabei Steuerbefehle, basierend auf dem Vergleichsergebnis des Soll-Ist-Vergleichs an die Maschine. Dadurch kann beispielsweise eine Drehzahl der Maschine angepasst werden, wodurch sich automatisch eine Drehzahl der Gleitringdichtungsanordnung anpasst, da die Gleitringdichtungsanordnung mit dem rotierenden Gleitring auf einer Welle der Maschine angeordnet ist. Dadurch kann beispielsweise ein Druck im Produktbereich, an welchem die Gleitringdichtungsanordnung abdichtet, geändert werden, so dass sich Dichtungsparameter der Gleitringdichtungsanordnung entsprechend ändern. Beispielsweise kann bei einer Drehzahlreduzierung der Maschinendrehzahl durch die gleichzeitige Drehzahlreduzierung an der Gleitringdichtungsanordnung ein Wärmeeintrag in die Gleitringdichtungsanordnung reduziert werden.

Gemäß einer weiteren bevorzugten Ausgestaltung der Erfindung umfasst die Gleitringdichtungsanordnung ein Versorgungssystem, welches die Gleitringdichtung mit einem Sperrfluid versorgt. Die Maschinensteuerung ist dabei eingerichtet, Steuerbefehle an das Versorgungssystem auszugeben, welche auf dem Vergleichsergebnis des Soll-Ist-Vergleichs der Solldaten aus dem Prüfstand mit den Ist-Daten der Gleitringdichtungsanordnung basieren. Beispielsweise können Steuerbefehle an das Versorgungssystem derart vorgesehen sein, dass eine Temperatur des Sperrfluids, ein Druck des Sperrfluids und/oder ein Volumenstrom des Sperrfluids geändert wird. Das Versorgungssystem umfasst dabei vorzugsweise eine Heizeinrichtung und/oder eine Kühleinrichtung sowie eine eigene Umwälzvorrichtung, beispielsweise einen eigenen Verdichter, um einen Druck und/oder einen Massenstrom des Sperrfluids zu ändern.

Besonders bevorzugt werden Messdaten aus dem Versorgungssystem zur Maschinensteuerung übertragen, wobei die Maschinensteuerung eingerichtet ist, Steuerbefehle basierend an das Versorgungssystem und/oder die Maschine auszugeben. Beispielsweise können Messdaten betreffend einen Zustand des zur Gleitringdichtung zugeführten Sperrfluids und/oder eines Zustands des von der Gleitringdichtung zurückgeführten Sperrfluids erfasst werden und zur Maschinensteuerung übertragen werden. Messdaten können beispielsweise eine Temperatur des Sperrfluids, ein Druck des Sperrfluids, ein Massenstrom des Sperrfluids und eine Verunreinigung des zurückgeführten Sperrfluids sein. Ferner betrifft die vorliegende Erfindung eine Gleitringdichtungsanordnung umfassend eine Gleitringdichtung mit einem rotierendem und einem stationären Gleitring, welche zwischen ihren Gleitflächen einen Dichtspalt definieren. Die Gleitringdichtung umfasst dabei eine Vielzahl von Sensoren, um verschiedene Betriebsdaten und/oder Umgebungsdaten der Gleitringdichtung zu erfassen. Ferner umfasst die Gleitringdichtungsanordnung eine Rechnereinheit, welche eingerichtet ist, ein Vergleich der individuellen Soll-Daten mit den zur Rechnereinheit übertragenden individuellen Ist-Daten durchzuführen.

Vorzugsweise umfasst die Rechnereinheit einen digitalen Zwilling der individuellen Gleitringdichtungsanordnung, wobei die Rechnereinheit eingerichtet ist einen Betrieb der realen Gleitringdichtungsanordnung auf dem digitalen Zwilling basierend auf den erfassten Betriebsdaten und/oder Umgebungsdaten und bereits vorhandener, individueller Daten der Gleitringdichtungsanordnung und/oder baureihengleicher Daten von Gleitringdichtungsanordnungen zu simulieren. Dadurch kann in Echtzeit eine genaue Überwachung der Gleitringdichtungsanordnung ermöglicht werden.

Weiter bevorzugt ist die Rechnereinheit eingerichtet, am Prüfstand Soll-Daten an mehreren einzelnen Stützpunkten zu erfassen und zwischen den benachbarten Stützpunkten eine Interpolation der Daten auszuführen, um kontinuierliche Datenreihen der Soll-Daten zu bestimmen. Dadurch kann die Erfassung der Soll-Daten auf dem Prüfstand in kürzester Zeit durchgeführt werden und ferner auch eine notwendige Rechenleistung für die Rechnereinheit reduziert werden.

Weiter bevorzugt ist die Rechnereinheit eingerichtet, für die Simulation weitere individuelle Soll-Daten und/oder Ist-Daten von Gleitringdichtungsanordnungen einer gleichen Baureihe wie die zu überwachende Gleitringdichtungsanordnung zu verwenden. Hierdurch ist es möglich, eine Genauigkeit der Überwachung zu verbessern und insbesondere auch Aussagen hinsichtlich einer zukünftigen Ausfallwahrscheinlichkeit der Gleitringdichtungsanordnung, insbesondere basierend auf einer Überwachung des Leckage-Werts der individuellen Gleitringdichtung, zu ermöglichen.

Die erfindungsgemäße Gleitringdichtungsanordnung ist vorzugsweise eine gasgeschmierte Gleitringdichtungsanordnung und wird weiter bevorzugt bei einem Kompressor verwendet.

Weiterhin betrifft die vorliegende Erfindung eine Maschine, insbesondere einen Kompressor, umfassend eine erfindungsgemäße Gleitringdichtungsanordnung sowie eine Maschinensteuerung, welche eingerichtet ist, um die Maschine und/oder ein Versorgungssystem der Gleitringdichtung anzusteuern. Besonders bevorzugt ist die Maschinensteuerung dabei eingerichtet, das Versorgungssystem basierend auf Messdaten des Versorgungssystems, insbesondere Druck, Temperatur, Massenstrom des Sperrfluids des Versorgungssystems und/oder einer Verschmutzung des zurückgeführten Sperrfluids, zu verarbeiten und entsprechende Steuerbefehle auszugeben.

Nachfolgend werden unter Bezugnahme auf die begleitende Zeichnung bevorzugte Ausführungsbeispiele der Erfindung im Detail beschrieben. In der Zeichnung ist:
- Fig. 1: eine schematische Darstellung, welche eine Durchführung des Verfahrens sowie eine Gleitringdichtungsanordnung gemäß einem ersten bevorzugten Ausführungsbeispiel der Erfindung zeigt, und
- Fig. 2: eine schematische Darstellung eines Verfahrens und einer Gleitringdichtungsanordnung sowie einer Maschine gemäß einem zweiten Ausführungsbeispiel der Erfindung.

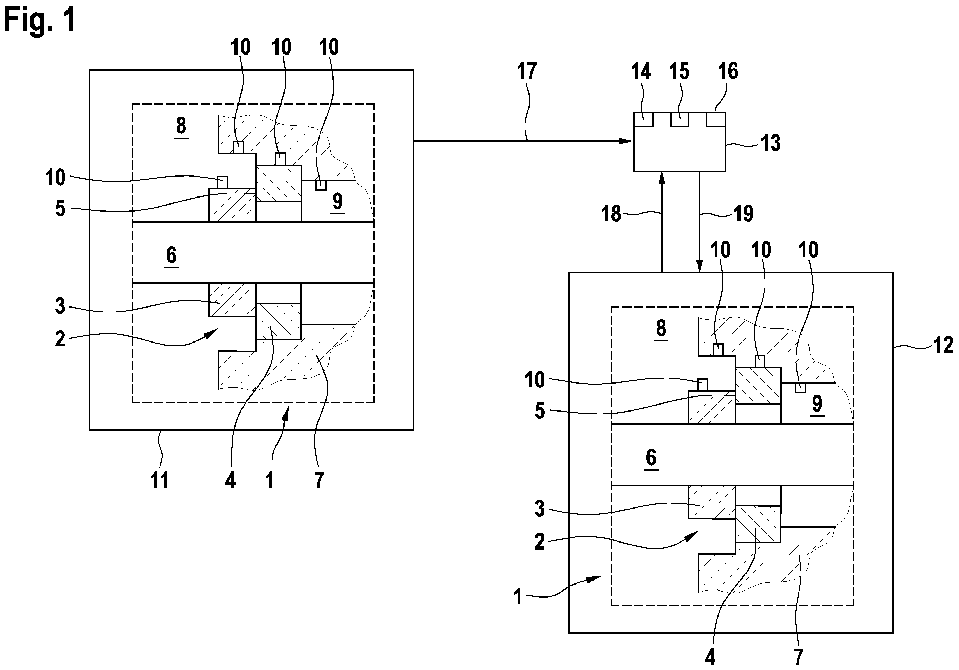

Nachfolgend wird unter Bezugnahme auf Figur 1 ein Verfahren zum Überwachen einer Gleitringdichtungsanordnung 1 sowie eine Gleitringdichtungsanordnung 1, welche mit dem erfindungsgemäßen Verfahren überwacht werden kann, gemäß einem ersten Ausführungsbeispiel im Detail beschrieben. Figur 1 zeigt schematisch den Ablauf des Verfahrens zum Überwachen der Gleitringdichtungsanordnung 1 sowie Details der Gleitringdichtungsanordnung 1.

Die Gleitringdichtungsanordnung 1 umfasst eine Gleitringdichtung 2 mit einem rotierenden Gleitring 3 an einem stationären Gleitring 4. Zwischen den beiden Dichtflächen der rotierenden und des stationären Gleitrings 3, 4 ist ein Dichtspalt 5 definiert.

Die Gleitringdichtung 2 dichtet dabei an einer Welle 6 einen Produktbereich 8 von einem Atmosphärenbereich 9 ab. Das Bezugszeichen 7 bezeichnet dabei ein Gehäuse der Gleitringdichtungsanordnung 1, an welchem der stationäre Gleitring 4 angeordnet ist.

In der Gleitringdichtungsanordnung 1 sind ferner mehrere Sensoren 10 integriert, welche in Figur 1 schematisch dargestellt sind. Die Sensoren 10 können dabei im oder am Gehäuse angeordnet sein und ferner auch an dem stationären und/oder rotierenden Gleitring 3, 4 angeordnet sein. Auch können Sensoren an der Welle 6 positioniert sein.

Die Sensoren 10 sind eingerichtet, unterschiedliche Betriebsparameter wie beispielsweise Temperatur, Druck, Drehzahl, Leckage der Gleitringdichtung, Spalthöhe am Dichtspalt 5, Vibration an den Gleitringen 3, 4, Körperschall, Oberflächenschall, Spannungen und oder Verformungen der Gleitringe 3, 4, Kontakte an den Gleitflächen der Gleitringe und/oder Verschleiß an den Gleitringen 3, 4 zu erfassen und als Betriebsdaten zu definieren.

Das Bezugszeichen 11 bezeichnet dabei einen Prüfstand, welcher üblicherweise beim Hersteller der Gleitringdichtungsanordnung steht. Eine individuelle Gleitringdichtungsanordnung 1 wird dabei nach ihrer Herstellung auf dem Prüfstand geprüft und Betriebsdaten an mehreren unterschiedlichen Betriebspunkten mittels der Sensoren 10 und gegebenenfalls weiteren Sensoren, die am Prüfstand angeordnet sind, erfasst. Diese erfassten Betriebsdaten auf dem Prüfstand 11 werden dann als Soll-Daten dieser individuellen Gleitringdichtungsanordnung 1 definiert.

Die Soll-Daten werden in einer Rechnereinheit 13 in einem Speicher 14 abgespeichert. Die Rechnereinheit 13 ist ferner eingerichtet, die an mehreren Betriebspunkten erfassten Betriebsdaten so zu verarbeiten, dass eine Interpolation von Betriebsdaten zwischen zwei gemessenen Betriebspunkten ermöglicht wird. Dies wird für alle erfassten Betriebsparameter ausgeführt, sodass mehrere Soll-Datenreihen für unterschiedliche Betriebsparameter als SollWerte vorhanden sind.

Die Rechnereinheit 13 umfasst ferner einen Vergleicher 15 sowie einen digitalen Zwilling 16. Der digitale Zwilling 16 ist ein digitales Abbild der individuellen Gleitringdichtungsanordnung 1 in einem Dichtsystem 12, in welchem die individuelle Gleitringdichtung 1 später in einer Anwendung eingebaut wird.

Nach Erfassung der Betriebsdaten auf dem Prüfstand 11 wird die individuelle Gleitringdichtungsanordnung 1 dann im Dichtsystem 12, insbesondere in einem Kompressor, eingebaut.

Im Betrieb im Dichtsystem 12 werden dann Ist-Daten 18 an unterschiedlichen Betriebspunkten der Gleitringdichtung 1 erfasst und an die Rechnereinheit 13 übertragen. Somit bilden die im Dichtsystem 12 beim Kunden im Betrieb ermittelten Betriebsdaten die Ist-Daten 18.

Die Soll-Daten 17 und die Ist-Daten 18 werden dann in der Rechnereinheit 13 im Vergleicher 15 miteinander verglichen. Ferner werden die Soll-Daten 17 und die Ist-Daten 18 in den digitalen Zwilling 16 übertragen und dort der Betrieb der Gleitringdichtungsanordnung 1 simuliert.

Die Rechnereinheit 13 ist ferner eingerichtet, gegebenenfalls Betriebsbefehle 19 an das Dichtsystem 12 auszugeben, um bei einem Erkennen eines kritischen Betriebsstandes entsprechende Gegenmaßnahmen einzuleiten, beispielsweise eine erhöhte Kühlung durch Drehzahlerhöhung einer Kühlmittelpumpe oder dergleichen oder eine Reduzierung einer Drehzahl der Welle 6, um kapitale Schäden an der Gleitringdichtung 2 zu vermeiden.

Der digitale Zwilling 16 ist dabei vorzugsweise als lernendes System ausgelegt und kann somit mit steigender Betriebsdauer der Gleitringdichtungsanordnung 1 auch eine ansteigende Anzahl von Ist-Daten verarbeiten, wodurch beispielsweise über die Zeit auch eine Trendanalyse von unterschiedlichen Betriebsdaten der Gleitringdichtungsanordnung 1 im Dichtsystem 12 ermöglicht wird. Dadurch kann beispielsweise frühzeitig erkannt werden, wenn sich ein Problem anbahnt und entsprechende Gegenmaßnahmen durchgeführt werden.

Es sei angemerkt, dass es auch möglich ist, dass die Rechnereinheit 13 zusätzlich externe Daten von anderen, baureihengleichen Gleitringdichtungsanordnungen verwendet, welche beispielsweise unterschiedliche Durchmesser aufweisen oder bei unterschiedlichen Betriebsbedingungen und Umgebungsbedingungen z.B. unterschiedlichen Drücken und/oder Temperaturen, und/oder unterschiedlichen Medien verwendet werden.

Somit ermöglicht die Erfindung, dass eine Echtzeit-Dichtungsüberwachung mit einem Soll-Ist-Vergleich durchgeführt werden kann, um so einen ordnungsgemäßen Betrieb der Gleitringdichtungsanordnung 1 sicherzustellen. Dabei kann ein Vergleich zwischen den Prüfstandsdaten, den Simulationsdaten und auch den Ist-Daten der Gleitringdichtung durchgeführt werden und gegebenenfalls entsprechende Maßnahmen ergriffen werden. Als Steuerungsgröße wird dabei bevorzugt eine Leckage der Gleitringdichtung 2 über dem Dichtspalt 5 verwendet, da bei den meisten Anwendungsfällen vermieden werden muss, dass das Medium aus dem Produktbereich 8 in die Atmosphäre im Atmosphärenbereich 9 gelangen kann. Da ein Vergleich der Prüfstanddaten der individuellen Gleitringdichtungsanordnung 1 mit den tatsächlichen Ist-Daten dieser Gleitringdichtungsanordnung 1 im Anwendungsbereich des Dichtsystems 12 ermöglicht wird und kein Vergleich der Ist-Daten mit theoretischen Daten, welche beispielsweise bei einer Auslegung der Gleitringdichtungsanordnung 1 bestimmt werden, möglich ist, kann eine viel genauere und schnellere Überwachung der Gleitringdichtungsanordnung 1 ermöglicht werden. Zusätzlich kann noch eine weitere Überwachung mittels der Simulationsdaten aus dem digitalen Zwilling 16 erfolgen. Dabei kann die Überwachung mit kleinem Rechenaufwand und in sehr kurzer Zeit durchgeführt werden, sodass schnell gegebenenfalls auch Gegenmaßnahmen eingeleitet werden können.

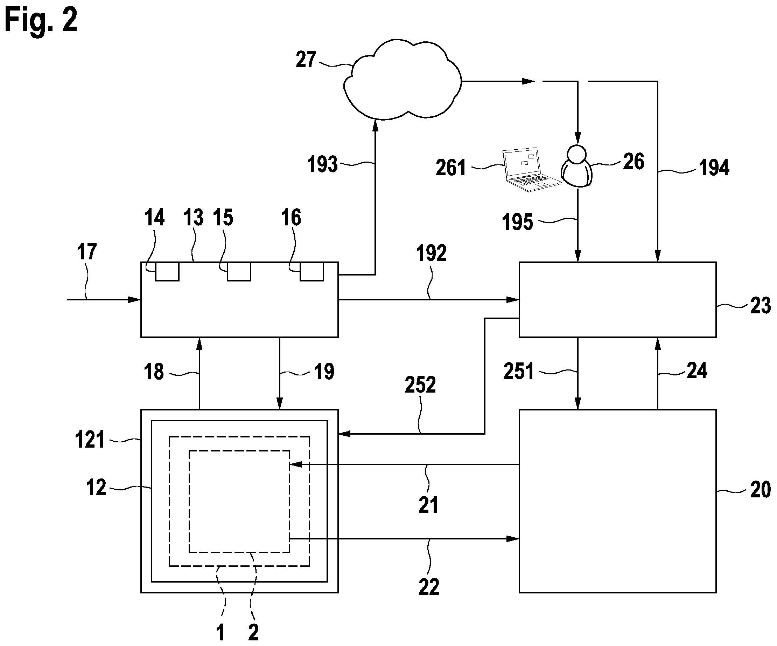

Fig. 2 zeigt ein Verfahren, eine Gleitringdichtungsanordnung 1 und eine Maschine 121 mit einem Dichtsystem 12 gemäß einem zweiten Ausführungsbeispiel der Erfindung. Gleiche bzw. funktional gleiche Teile sind mit den gleichen Bezugszeichen wie im ersten Ausführungsbeispiel bezeichnet. Zur besseren Übersichtlichkeit ist in Fig. 2 der Prüfstand 11, von welchem die Prüfstandsdaten 17 (Soll-Daten) zur Rechnereinheit 13 übertragen werden, nicht dargestellt, ist jedoch selbstverständlich vorhanden.

In diesem Ausführungsbeispiel umfasst die Gleitringdichtungsanordnung 1 zusätzlich ein Versorgungssystem 20 für die Gleitringdichtung 2, welches ein Sperrfluid 21 zur Gleitringdichtung 2 zuführt. Ein Rückfluss 22 des Sperrfluids wird von der Gleitringdichtung 2 zurück zum Versorgungssystem 20 geführt. Das Versorgungssystem umfasst üblicherweise eine Vielzahl von Einrichtungen, beispielsweise zum Reinigen des Sperrfluids 21, zum Aufheizen oder zum Kühlen des Sperrfluids sowie eine Fördereinheit, um das Sperrfluid zur Gleitringdichtungsanordnung 1 zu transportieren.

Weiterhin ist beim zweiten Ausführungsbeispiel eine Maschinensteuerung 23 vorhanden, welche eingerichtet ist, Steuerdaten 252 zu erzeugen und die Maschine 121, welche beispielsweise ein Kompressor ist, anzusteuern. Die Maschinensteuerung 23 ist ferner eingerichtet, Steuerdaten 251 auch zum Versorgungssystem 20 zuzuführen, um das Versorgungssystem zu steuern. Dadurch kann beispielsweise eine Temperatur des Sperrfluids, ein Druck des Sperrfluids und/oder ein Massenstrom des Sperrfluids eingestellt werden.

Wie weiter aus Fig. 2 ersichtlich ist, ist die Rechnereinheit 13 eingerichtet, neben dem Übertragen von Betriebsbefehlen und/oder rückübertragenen Daten zur Maschine 121 und insbesondere zur Gleitringdichtungsanordnung 1 auch Vergleichsdaten direkt zur Maschinensteuerung 23 zuzuführen. Dies ist in Fig. 2 mit dem Pfeil 192 dargestellt.

Somit wird der Maschinensteuerung 23 ein Vergleichsergebnis des Vergleichs der Soll-Daten 17 mit den Ist-Daten 18, welcher in der Rechnereinheit 13 durchgeführt wird, zu übertragen.

Dabei ist die Maschinensteuerung 23 eingerichtet, basierend auf dem Vergleichsergebnis Steuerbefehle 252 an die Maschine 121, basierend auf dem Vergleichsergebnis zu übertragen. Hierbei kann insbesondere eine Drehzahl der Maschine 121 geregelt werden. Da die Gleitringdichtungsanordnung 1 auf der gleichen Welle 6 wie die Maschine 121 angeordnet ist, hat eine Drehzahlregelung auch direkten Einfluss auf die Gleitringdichtung 2. Weiterhin ist die Maschinensteuerung 23 eingerichtet, Steuerbefehle 251 an das Versorgungssystem 20, basierend auf dem Vergleichsergebnis zu übertragen. Dadurch können am Versorgungssystem 20 beispielsweise eine Temperatur, ein Druck und/oder ein Massenstrom des Sperrfluids 21 eingestellt werden.

Wie weiter aus Fig. 2 ersichtlich ist, werden der Maschinensteuerung 23 auch Messdaten 24 zugeführt, welche aus dem Versorgungskreislauf des Versorgungssystems 20 entnommen werden. Derartige Messdaten können beispielsweise ein Druck des Sperrfluids, eine Temperatur des Sperrfluids, ein Massenstrom des Sperrfluids und/oder ein Verschmutzungsgrad des Sperrfluids sein. Entsprechend kann die Maschinensteuerung 23 dann direkt Steuerdaten 251 an das Versorgungssystem 20 übertragen, um einem Ausfall der Gleitringdichtung 2 vorzubeugen. Bevorzugt ist es auch möglich, dass die Maschinensteuerung 23 basierend auf den Messdaten 24 auch Steuerdaten 252 an die Maschine 121, insbesondere zur Regelung einer Drehzahl der Maschine, überträgt und die Maschine 121 entsprechend steuert.

Üblicherweise sind die Maschinensteuerung 23 und das Versorgungssystem 20 bei einem Nutzer der Gleitringdichtungsanordnung 1 angeordnet. Wie schematisch in Fig. 2 dargestellt, ist es jedoch auch denkbar, dass die Vergleichsergebnisse an eine Cloud 27, d.h., ein Bereich außerhalb eines Betriebsbereichs des Nutzers der Gleitringdichtungsanordnung zu übertragen (Pfeil 193). Die Daten können dann von der Cloud 27 beispielsweise zu einem Maschinenbediener 26, welcher Steuerbefehle 195 an die Maschinensteuerung manuell mittels eines Rechners 261 generieren kann, verwendet werden. Alternativ können die Vergleichsergebnisse aus der Cloud 27 auch direkt zur Maschinensteuerung 23 (Pfeil 194) übertragen werden und in der Maschinensteuerung 23 verarbeitet werden.

Ansonsten entspricht dieses Ausführungsbeispiel dem vorhergehenden Ausführungsbeispiel, so dass auf die dort gegebene Beschreibung verwiesen werden kann.

Neben der vorstehenden schriftlichen Beschreibung der Erfindung wird zu deren ergänzender Offenbarung hiermit explizit auf die zeichnerische Darstellung der Erfindung in den Fig. 1 und 2 Bezug genommen.

### Bezugszeichenliste

- 1: Gleitringdichtungsanordnung
- 2: Gleitringdichtung
- 3: rotierender Gleitring
- 4: stationärer Gleitring
- 5: Dichtspalt
- 6: Welle
- 7: Gehäuse
- 8: Produktbereich
- 9: Atmosphärenbereich
- 10: Sensoren
- 11: Prüfstand
- 12: Dichtsystem
- 13: Rechnereinheit
- 14: Speicher
- 15: Vergleicher
- 16: digitaler Zwilling
- 17: Soll-Daten
- 18: Ist-Daten
- 19: Betriebsbefehle/rückübertragende Daten
- 20: Versorgungssystem
- 21: Sperrfluid (Zufuhr)
- 22: Rückfluss des Sperrfluids
- 23: Maschinensteuerung
- 24: Messdaten
- 26: Maschinenbediener
- 27: Cloud
- 121: Maschine / Kompressor
- 192: Transfer der Vergleichsergebnisse von der Rechnereinheit 13 zur Maschinensteuerung 23
- 193: Transfer der Vergleichsergebnisse von der Rechnereinheit 13 zur Cloud 27
- 194: Transfer der Vergleichsergebnisse von der Cloud 27 zur Maschinensteuerung 23
- 195: vom Maschinenbediener eingegebene Steuerbefehle für die Maschinensteuerung 23
- 251: Steuerdaten zum Versorgungssystem
- 252: Steuerdaten zur Maschine
- 261: Rechner des Maschinenbedieners

## Patentansprüche

1. Verfahren zum Überwachen einer Gleitringdichtungsanordnung (1) umfassend die Schritte:
- Erfassen von Betriebsdaten einer individuellen Gleitringdichtungsanordnung (1) auf einem Prüfstand (11), wobei die erfassten Betriebsdaten als Soll-Daten (17) definiert werden
- Einbau der individuellen Gleitringdichtungsanordnung (1) in einem Dichtsystem (12),
- Erfassen von Betriebsdaten der individuellen Gleitringdichtungsanordnung (1) in dem im Dichtsystem (12) eingebauten Zustand, wobei die erfassten Betriebsdaten als Ist-Daten (18) definiert werden, und
- Vergleichen der Soll-Daten (17) mit den Ist-Daten (18).

2. Verfahren nach Anspruch 1, wobei bei einer Feststellung einer Abweichung zwischen den Soll-Daten (17) und den Ist-Daten (18), die über einem vorbestimmten Schwellenwert liegt, eine Warnung ausgegeben wird und/oder eine Einleitung von Gegenmaßnahmen durchgeführt wird.

3. Verfahren nach einem der vorherigen Ansprüche, wobei die Ist-Daten (18) in einem digitalen Zwilling (16), welcher ein digitales Abbild der eingebauten Gleitringdichtungsanordnung (1) im Dichtsystem (12) ist, verwendet werden, um eine Simulation der Gleitringdichtungsanordnung (1) auf dem digitalen Zwilling (16) durchzuführen.

4. Verfahren nach Anspruch 3, wobei die im digitalen Zwilling (16) erzeugten Simulationsdaten mit den Soll-Daten (17) verglichen werden.

5. Verfahren nach Anspruch 3 oder 4, wobei für die Simulation im digitalen Zwilling (16) zusätzlich weitere Soll-Daten und/oder Ist-Daten von anderen Gleitringdichtungsanordnungen, die der gleichen Baureihe wie die individuelle, überwachte Gleitringdichtungsanordnung (1) zugehörig sind, verwendet werden.

6. Verfahren nach einem der vorherigen Ansprüche, wobei beim Schritt des Erfassens der Betriebsdaten der individuellen Gleitringdichtungsanordnung (1) auf dem Prüfstand (11) Soll-Daten (17) nur punktuell für unterschiedliche Betriebszustände auf dem Prüfstand (11) erfasst werden und Zwischendaten, die zwischen den einzelnen punktuell erfassten Betriebsdaten liegen, mittels Interpolation bestimmt werden, um eine vollständige Soll-Datenreihe zu erzeugen.

7. Verfahren nach einem der Ansprüche 3 bis 6, wobei bei der Simulation im digitalen Zwilling (16) ein Leckage-Wert der Gleitringdichtungsanordnung (1) bestimmt wird und als Steuergröße für eine Steuerung der individuellen Gleitringdichtungsanordnung (1) im Dichtsystem (12) verwendet wird.

8. Verfahren nach einem der vorherigen Ansprüche, wobei die Überwachung der Gleitringdichtungsanordnung (1) in Echtzeit durchgeführt wird und/oder wobei aus allen erfassten Daten über die Zeit eine Trendanalyse durchgeführt wird.

9. Verfahren nach einem der vorhergehenden Ansprüche, wobei ein Vergleichsergebnis des Vergleichs der Soll-Daten (17) mit Ist-Daten (18) einer Maschinensteuerung (23) zugeführt wird, wobei die Maschinensteuerung (23) eingerichtet ist, um Steuerbefehle (252) an eine Maschine (121) basierend auf dem Vergleichsergebnis zu bestimmen und zu übertragen.

10. Verfahren nach Anspruch 9, wobei die Maschinensteuerung (23) ferner eingerichtet ist, Steuerbefehle (251) für ein Versorgungssystem (20), welches die Gleitringdichtung (2) mit einem Sperrfluid (21) versorgt, basierend auf dem Vergleichsergebnis zu bestimmen und zu übertragen.

11. Verfahren nach Anspruch 10, wobei Messdaten (24) des Versorgungssystems (20) an die Maschinensteuerung (23) übertragen werden, wobei die Maschinensteuerung (23) eingerichtet ist, basierend auf den Messdaten (24) Steuerbefehle an die Maschine (121) und/oder an das Versorgungssystem (20) auszugeben.

12. Gleitringdichtungsanordnung (1), umfassend:
- eine Gleitringdichtung (2) mit einem rotierendem Gleitring (3) und einem stationären Gleitring (4), welche zwischen ihren Gleitflächen einen Dichtspalt (5) definieren und mit einer Vielzahl von Sensoren (10), wobei die Sensoren (10) eingerichtet sind, verschiedene Betriebsdaten und/oder Umgebungsdaten der Gleitringdichtungsanordnung (1) im Dichtsystem (12) als Ist-Daten (18) zu erfassen, und
- eine Rechnereinheit (13) mit einem Speicher (14) in welchem individuelle Betriebsdaten der Gleitringdichtungsanordnung (1), welche auf einem Prüfstand erfasst wurden, als Soll-Daten (17) gespeichert sind,
- **dadurch gekennzeichnet, dass** die Rechnereinheit (13) eingerichtet ist, einen Vergleich der Soll-Daten (17) mit den Ist-Daten (18) auszuführen.

13. Gleitringdichtungsanordnung (1) nach Anspruch 12, wobei die Rechnereinheit (13) ferner einen digitalen Zwilling (16) der Gleitringdichtungsanordnung (1) aufweist, wobei der digitale Zwilling (16) eingerichtet ist, einen Betrieb der Gleitringdichtungsanordnung (1) anhand der Ist-Daten (18) der Gleitringdichtungsanordnung (1) zu simulieren.

14. Gleitringdichtungsanordnung (1) nach Anspruch 12 oder 13,
- wobei die auf dem Prüfstand (11) erfassten Soll-Daten (17) der Gleitringdichtungsanordnung (1) mehrere einzelne Stützpunkte sind und die Rechnereinheit (13) eingerichtet ist, zwischen benachbarten Stützpunkten eine Interpolation auszuführen, um jeweils Soll-Datenreihen von auf dem Prüfstand erfassten Betriebsdaten zu erzeugen und/oder
- wobei die Rechnereinheit (13) eingerichtet ist, einen Vergleich der Simulationsdaten des digitalen Zwillings (16) mit den Soll-Daten (17) und/oder den Ist-Daten (18) auszuführen und/oder Betriebsbefehle (19) an die Gleitringdichtungsanordnung (1) im Dichtsystem (12) auszugeben.

15. Maschine, insbesondere Kompressor, umfassend
- eine Gleitringdichtungsanordnung nach einem der Ansprüche 12 bis 14 und
- eine Maschinensteuerung (23), welche eingerichtet ist, Steuerbefehle an die Maschine (121) und/oder an ein Versorgungssystem (20) zur Versorgung der Gleitringdichtung (2) mit Sperrfluid (21) auszugeben.

## Claims

1. A method of monitoring a mechanical seal arrangement (1) comprising the steps of:
- acquiring operational data of an individual mechanical seal arrangement (1) on a test bench (11), the acquired operational data being defined as the nominal data (17)
- mounting the individual mechanical seal arrangement (1) into a sealing system (12),
- acquiring operational data of the individual mechanical seal arrangement (1) in the state installed in the sealing system (12), the acquired operational data being defined as the actual data (18), and
- comparing the nominal data (17) with the actual data (18).

2. The method according to claim 1, wherein upon detection of any deviation between the nominal data (17) and the actual data (18) that are above a predetermined threshold value, a warning is issued and/or initiation of countermeasures is performed.

3. The method according to any one of the preceding claims, wherein the actual data (18) are used in a digital twin (16), which is a digital image of the mechanical seal arrangement (1) incorporated in the sealing system (12), to perform simulation of the mechanical seal arrangement (1) on the digital twin (16).

4. The method according to claim 3, wherein the simulation data generated in the digital twin (16) are compared with the nominal data (17).

5. The method according to claim 3 or 4, wherein for the simulation in the digital twin (16) additionally further nominal data and/or actual data of other mechanical seal arrangements belonging to the same production series as the individual, monitored mechanical seal arrangement (1) are used.

6. The method according to one of the preceding claims, wherein, in the step of acquiring the operational data of the individual mechanical seal arrangement (1) on the test bench (11), nominal data (17) are acquired only selectively for different operating states on the test bench (11) and intermediate data in the range between the individual selectively acquired operational data are determined using interpolation to generate a complete set of nominal data.

7. Method according to one of the claims 3 to 6, wherein a leakage value of the mechanical seal arrangement (1) is determined during the simulation in the digital twin (16) and is used as a controller variable for controlling the individual mechanical seal arrangement (1) in the sealing system (12).

8. The method according to one of the preceding claims, wherein monitoring the mechanical seal arrangement (1) is performed in real time and/or wherein a trend analysis is performed using all data acquired over time.

9. The method according to one of the preceding claims, wherein a comparison result of the comparison of the nominal data (17) with actual data (18) is fed to a machine controller (23), wherein the machine controller (23) is configured to determine and transmit control commands (252) to a machine (121) based on the comparison result.

10. The method according to claim 9, wherein the machine controller (23) is further configured to determine and transmit control commands (251) to a supply system (20) that supplies the mechanical seal (2) with a barrier fluid (21) based on the comparison result.

11. The method according to claim 10, wherein measured data (24) of the supply system (20) are transferred to the machine controller (23), wherein the machine controller (23) is configured to issue control commands to the machine (121) and/or to the supply system (20) based on the measured data (24).

12. A mechanical seal arrangement (1), comprising:
- a mechanical seal (2) having a rotating sliding ring (3) and a stationary sliding ring (4) defining a sealing gap (5) between their sliding surfaces and having a plurality of sensors (10), the sensors (10) being configured to detect various operational data and/or environmental data of the mechanical seal arrangement (1) in the sealing system (12) as the actual data (18), and
- a computer unit (13) including a memory (14) in which individual operational data of the mechanical seal arrangement (1), which were recorded on a test bench, are stored as the nominal data (17),
- **characterized in that** the computer unit (13) is configured to perform comparison of the nominal data (17) with the actual data (18).

13. The mechanical seal arrangement (1) according to claim 12, wherein the computer unit (13) further comprises a digital twin (16) of the mechanical seal arrangement (1), wherein the digital twin (16) is configured to simulate an operation of the mechanical seal arrangement (1) based on actual data (18) of the mechanical seal arrangement (1).

14. The mechanical seal arrangement (1) according to claim 12 or 13,
- wherein the nominal data (17) of the mechanical seal arrangement (1) recorded on the test bench (11) are a plurality of individual control points, and the computer unit (13) is configured to perform an interpolation between adjacent control points to generate respective nominal data sets of operational data recorded on the test bench, and/or
- wherein the computer unit (13) is configured to perform a comparison of the simulation data of the digital twin (16) with the nominal data (17) and/or the actual data (18) and/or to issue operating commands (19) to the mechanical seal arrangement (1) in the sealing system (12).

15. A machine, in particular a compressor, comprising
- a mechanical seal arrangement according to one of the claims 12 to 14 and
- a machine controller (23) configured to issue control commands to the machine (121) and/or to a supply system (20) for supplying barrier fluid (21) to the mechanical seal (2).

## Revendications

1. Procédé de surveillance d'un ensemble d'étanchéité à bague coulissante (1) comprenant les étapes suivantes :
- la saisie de données de fonctionnement d'un ensemble d'étanchéité à bague coulissante (1) individuel sur un banc d'essai (11), dans lequel les données de fonctionnement saisies sont définies comme données théoriques (17)
- le montage de l'ensemble d'étanchéité à bague coulissante (1) individuel dans un système d'étanchéité (12),
- la saisie de données de fonctionnement de l'ensemble d'étanchéité à bague coulissante (1) individuel dans l'état monté dans le système d'étanchéité (12), dans lequel les données de fonctionnement saisies sont définies comme données réelles (18), et
- la comparaison des données théoriques (17) avec les données réelles (18).

2. Procédé selon la revendication 1, dans lequel en cas de constatation d'un écart entre les données théoriques (17) et les données réelles (18) qui est supérieur à une valeur seuil prédéterminée, un avertissement est émis et/ou une contre-mesure est mise en œuvre.

3. Procédé selon l'une quelconque des revendications précédentes, dans lequel les données réelles (18) sont utilisées dans un jumeau numérique (16), qui est une image numérique de l'ensemble d'étanchéité à bague coulissante (1) intégré dans le système d'étanchéité (12), pour effectuer une simulation de l'ensemble d'étanchéité à bague coulissante (1) sur le jumeau numérique (16).

4. Procédé selon la revendication 3, dans lequel les données de simulation générées dans le jumeau numérique (16) sont comparées aux données théoriques (17).

5. Procédé selon la revendication 3 ou 4, dans lequel pour la simulation dans le jumeau numérique (16), d'autres données théoriques et/ou données réelles d'autres dispositifs d'étanchéité à bague coulissante appartenant à la même série que le dispositif d'étanchéité à bague coulissante (1) individuel surveillé sont en outre utilisées.

6. Procédé selon l'une quelconque des revendications précédentes, dans lequel lors de l'étape de saisie des données de fonctionnement de l'ensemble d'étanchéité à bague coulissante (1) individuel sur le banc d'essai (11), les données théoriques (17) ne sont saisies que ponctuellement pour différents états de fonctionnement sur le banc d'essai (11) et les données intermédiaires qui se situent entre les données de fonctionnement individuelles saisies ponctuellement sont déterminées par interpolation pour générer une série complète de données théoriques.

7. Procédé selon l'une quelconque des revendications 3 à 6, dans lequel lors de la simulation dans le jumeau numérique (16), une valeur de fuite de l'ensemble d'étanchéité à bague coulissante (1) est déterminée et utilisée comme grandeur de commande pour une commande de l'ensemble d'étanchéité à bague coulissante (1) individuel dans le système d'étanchéité (12).

8. Procédé selon l'une quelconque des revendications précédentes, dans lequel la surveillance de l'ensemble d'étanchéité à bague coulissante (1) est effectuée en temps réel et/ou dans lequel une analyse de tendance est effectuée à partir de toutes les données saisies au fil du temps.

9. Procédé selon l'une quelconque des revendications précédentes, dans lequel un résultat de la comparaison des données théoriques (17) avec des données réelles (18) est fourni à une commande de machine (23), dans lequel la commande de machine (23) est configurée pour déterminer et transmettre des ordres de commande (252) à une machine (121) sur la base du résultat de comparaison.

10. Procédé selon la revendication 9, dans lequel la commande de machine (23) est de plus configurée pour déterminer et transmettre des ordres de commande (251) pour un système d'alimentation (20) qui alimente le joint mécanique (2) en un fluide de verrouillage (21) sur la base du résultat de comparaison.

11. Procédé selon la revendication 10, dans lequel des données de mesure (24) du système d'alimentation (20) sont transmises à la commande de machine (23), dans lequel la commande de machine (23) est configurée pour émettre des ordres de commande à la machine (121) et/ou au système d'alimentation (20) sur la base des données de mesure (24).

12. Ensemble d'étanchéité à bague coulissante (1), comprenant :
- une garniture mécanique (2) avec une bague coulissante rotative (3) et une bague coulissante fixe (4) qui définissent entre leurs surfaces coulissantes une fente d'étanchéité (5) et avec une pluralité de capteurs (10), dans lequel les capteurs (10) sont configurés pour saisir différentes données de fonctionnement et/ou données environnantes de l'ensemble d'étanchéité à bague coulissante (1) dans le système d'étanchéité (12) comme données réelles (18), et
- une unité de calcul (13) avec une mémoire (14), dans laquelle des données de fonctionnement individuelles de l'ensemble d'étanchéité à bague coulissante (1), qui ont été saisies sur un banc d'essai, sont enregistrées comme données théoriques (17),
- **caractérisé en ce que**
l'unité de calcul (13) est configurée pour effectuer une comparaison des données théoriques (17) avec les données réelles (18).

13. Ensemble d'étanchéité à bague coulissante (1) selon la revendication 12, dans lequel l'unité de calcul (13) présente de plus un jumeau numérique (16) de l'ensemble d'étanchéité à bague coulissante (1), dans lequel le jumeau numérique (16) est configuré pour simuler un fonctionnement de l'ensemble d'étanchéité à bague coulissante (1) à l'aide des données réelles (18) de l'ensemble d'étanchéité à bague coulissante (1).

14. Ensemble d'étanchéité à bague coulissante (1) selon la revendication 12 ou 13,
- dans lequel les données théoriques (17) de l'ensemble d'étanchéité à bague coulissante (1) saisies sur le banc d'essai (11) sont plusieurs points d'appui individuels et l'unité de calcul (13) est configurée pour effectuer une interpolation entre des points d'appui voisins afin de générer respectivement des séries de données théoriques de données de fonctionnement saisies sur le banc d'essai et/ou
- dans lequel l'unité de calcul (13) est configurée pour effectuer une comparaison des données de simulation du jumeau numérique (16) avec les données théoriques (17) et/ou les données réelles (18) et/ou émettre des ordres de fonctionnement (19) à l'ensemble d'étanchéité à bague coulissante (1) dans le système d'étanchéité (12).

15. Machine, en particulier compresseur, comprenant
- un ensemble d'étanchéité à bague coulissante selon l'une quelconque des revendications 12 à 14 et
- une commande de machine (23) qui est configurée pour émettre des ordres de commande à la machine (121) et/ou à un système d'alimentation (20) pour alimenter le joint mécanique (2) en fluide de verrouillage (21).
